Europäisches Patentamt

European Patent Office

Office européen des brevets

(19)

(11) Veröffentlichungsnummer : **0 089 715**
**B1**

(12)

# EUROPÄISCHE PATENTSCHRIFT

(45) Veröffentlichungstag der Patentschrift :
07.08.85

(51) Int. Cl.⁴ : **G 11 B 5/55**

(21) Anmeldenummer : 83200331.3

(22) Anmeldetag : 10.03.83

(54) Positionierungseinrichtung für den Magnetkopf eines scheibenförmigen Magnetspeichers.

(30) Priorität : 13.03.82 DE 3209243

(43) Veröffentlichungstag der Anmeldung :
28.09.83 Patentblatt 83/39

(45) Bekanntmachung des Hinweises auf die Patenterteilung : 07.08.85 Patentblatt 85/32

(84) Benannte Vertragsstaaten :
DE FR GB IT

(56) Entgegenhaltungen :
US-A- 3 678 481
US-A- 3 710 357
US-A- 3 723 980
US-A- 3 825 951

(73) Patentinhaber : Philips Patentverwaltung GmbH
Billstrasse 80
D-2000 Hamburg 28 (DE)
DE
N.V. Philips' Gloeilampenfabrieken
Groenewoudseweg 1
NL-5621 BA Eindhoven (NL)
FR GB IT

(72) Erfinder : Adamek, Manfred
Fliederweg 36
D-5242 Kirchen-Freusburg (DE)
Erfinder : Rinneburger, Klaus
Rathausstrasse 55
D-5901 Wilnsdorf 1 (DE)
Erfinder : Schattmann, Peter
Haubergstrasse 66
D-5900 Siegen 1 (DE)

(74) Vertreter : Hartmann, Heinrich, Dipl.-Ing. et al
Philips Patentverwaltung GmbH Billstrasse 80 Postfach 10 51 49
D-2000 Hamburg 28 (DE)

## Beschreibung

Die Erfindung betrifft eine Positionierungseinrichtung für den Magnetkopf eines Laufwerkes für scheibenförmige Magnetspeicher mit einem mittels einer Halteplatte am Grundgestell des Laufwerkes befestigten Schrittmotor, dessen Rotorwelle eine Magnetkopfhalterung radial zum Magnetspeicher verstellt.

Eine derartige Positionierungseinrichtung ist aus der US-PS 3 678 481 bekannt. Zur Positionierung des Magnetkopfes ist die Rotorwelle des Schrittmotors verlängert und als Spindel ausgebildet. Diese wirkt auf die Magnetkopfhalterung derart ein, daß in Abhängigkeit von der Drehrichtung der Rotorwelle die Halterung radial über der Magnetspeicherscheibe hin- oder herbewegt wird. Der Schrittmotor selbst ist außerhalb des Bereiches der Magnetspeicherscheibe fest auf dem Grundgestell des Laufwerkes angeordnet, das meist aus Aluminium oder glasfaserverstärktem Kunststoff hergestellt ist.

Um die Informationen auf dem scheibenförmigen Magnetspeicher auf Dauer exakt aufzeichnen bzw. auslesen zu können ist es wichtig, daß zwischen der Positionierungseinrichtung der Magnetkopfhalterung und dem scheibenförmigen Magnetspeicher keine Temperaturunterschiede und damit verschiedene Ausdehnungen auftreten. Eine volle Temperaturkompensation ist bei der bekannten Anordnung jedoch nicht möglich, da der Magnetspeicher und das Grundgestell aus verschiedenen Materialien mit ebenfalls verschiedenen Temperaturausdehnungskoeffizienten bestehen. So treten zum Beispiel bei Laufwerken mit flexiblen Magnetspeichern am Schrittmotorgehäuse Temperaturen von 70 °C bis 80 °C auf. Für die Magnetscheiben ist aber nur eine obere Temperatur von maximal 50 °C zulässig, die praktisch dann auch der obersten zulässigen Grundgestelltemperatur entspricht.

Die Schrittmotoren sind aus magnetischen und gerätenormativen Gründen hinter dem Magnetspeicher angeordnet. Das führt dazu, daß bei den bekannten, nicht temperaturkompensierten Laufwerken im eingeschwungenen Temperaturzustand der Magnetkopf um teilweise mehr als 30 μm aus der Spurlage des Magnetspeichers einseitig nach außen läuft. Ein sicherer Betrieb ist damit über den gesamten Temperaturbereich problematisch.

Der Erfindung liegt die Aufgabe zugrunde, die Positionierungseinrichtung für den Magnetkopf eines Laufwerkes für ein oder mehrere scheibenförmige Magnetspeicher derart auszubilden, daß die von dem Schrittmotor erzeugte Wärme sich nur unwesentlich auf die Magnetkopfhalterung auswirkt, so daß die Abweichung des Magnetkopfes von der Spur des Magnetspeichers auf ein vertretbares Minium herabgesetzt wird.

Diese Aufgabe wird dadurch gelöst, daß die Halteplatte aus einem Material mit geringer Wärmeausdehnung besteht und daß zwischen dem Schrittmotor und der Halteplatte eine Folie mit guter Wärmeableitung angeordnet ist.

Als besonders geeignetes Material für die Halteplatte des Schrittmotors hat sich Nickelstahl, eine sogenannte Invar (eingetragenes Warenzeichen)-Legierung gezeigt. Aber auch eine Halteplatte aus einfachem Stahl ergab in Verbindung mit einer Kupferfolie bereits eine Teilkompensation.

Durch die Erfindung wird erreicht, daß sich die Erwärmung des Schrittmotors, die normalerweise eine Ausdehnung des Grundgestelles in der Umgebung des Schrittmotors bewirkt, nur insoweit auf das Grundgestell auswirkt, daß deren Ausdehnung etwa der Ausdehnung der Magnetspeicherplatte entspricht. Eine generelle Vermeidung der Wärmeausdehnung des Grundgestelles durch den Schrittmotor ist jedoch nicht erwünscht. Da das Temperaturverhalten der Magnetspeicherplatte vorgegeben und daher nicht beeinflußbar ist, würden bei einer vollständigen Temperaturkompensation wiederum, jetzt im umgekehrten Sinne, verschiedene Wärmeausdehnungen von Magnetspeicher und Magnetkopfhalterung auftreten.

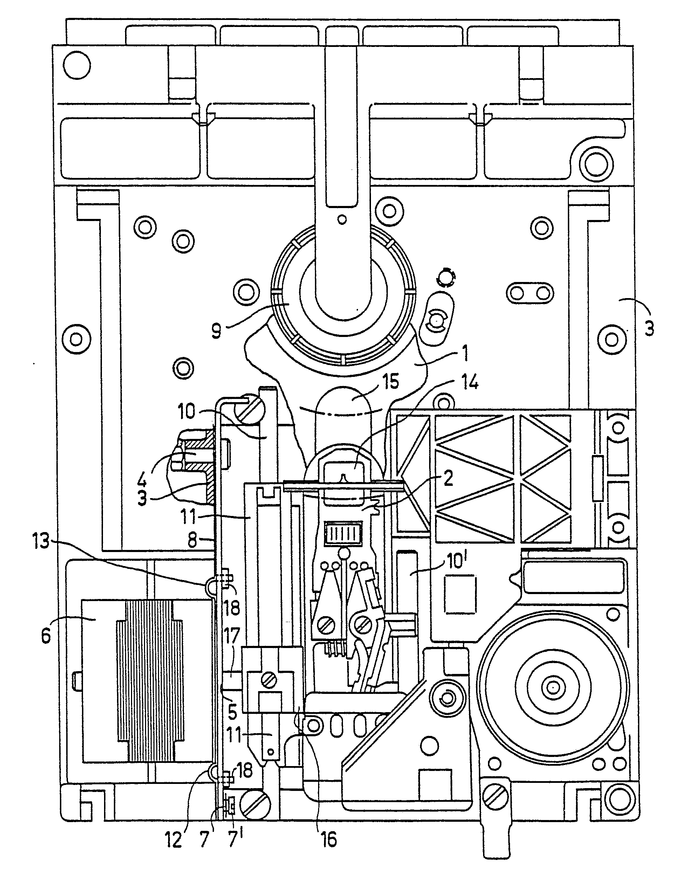

Die Erfindung wird anhand eines in der Zeichnung dargestellten Ausführungsbeispieles näher erläutert.

In der Figur ist die Draufsicht eines Laufwerkes für scheibenförmige Magnetspeicher 1 dargestellt. Dieser Magnetspeicher 1 wird von der oberen Seite in das Laufwerk eingeschoben und durch die Scheibenspindel 9 eingespannt und in Rotation versetzt.

Auf dem Grundgestell 3 sind Gleitstifte 10 un 10' befestigt, auf denen die Magnetkopfhalterung 2 verschiebbar gelagert ist. Zur Arbeitsstellung wird der Magnetkopf 14 durch die Aussparung 15 auf den Magnetspeicher 1 abgesenkt. Auf dem Teil der Magnetkopfhalterung 2, der über dem Gleitstift 10 angeordnet ist, befindet sich ein Steuerband 11, das um eine Rolle 16 geschlungen und an dieser befestigt ist. Die Rolle 16 sitzt auf der Rotorwelle 17 des Schrittmotors 6.

Der Schrittmotor 6 ist nicht direkt an dem Grundgestell 3 befestigt sondern über eine streifenförmige Halteplatte 5 aus einem Material, das eine sehr geringe Ausdehnung besitzt, d. h. sie dehnt sich auch bei höheren Temperaturen nur unwesentlich aus. Diese Halteplatte 5 ist an der einen Seite durch die Befestigung 4 fest mit dem Grundgestell 3 verbunden. Dabei ist es zweckmäßig, diese Befestigung 4 möglichst weit von der Scheibenspindel 9 anzuordnen, damit der Rundlauf des Magnetspeichers durch mögliche zusätzliche Erwärmung nicht beeinflußt wird. Auf der anderen Seite ist die Halteplatte 5 durch die Befestigung 7 schwimmend mit dem Grundgestell verbunden, so daß auch die geringe Ausdehnung der Halteplatte 5 nicht stört. Diese Befestigung kann zum Beispiel durch eine Kronenunterlegscheibe für die Schraube 7' erfolgen.

Als besonders geeignetes Material für die Halteplatte 5 mit geringer Ausdehnung hat sich Nickelstahl gezeigt.

Durch die Verwendung einer Halteplatte 5 mit geringer Wärmeausdehnung wird zwar eine wesentlich bessere Führung des Magnetkopfes 14 erreicht. Nun haben aber Materialien mit extrem geringem Ausdehnungskoeffizienten auch eine schlechte Wärmeleitung, die sich in zweifacher Hinsicht negativ auswirkt. Zum einen steigt die Motortemperatur sehr stark an, was unter anderem eine Drehmomentverringerung bewirkt, zum anderen tritt durch die erhöhte Erwärmung eine Verringerung der Temperaturkompensation ein. Um beide Einflüsse zu eliminieren, ist zwischen dem Schrittmotor 6 und der Halteplatte 5, die beide durch die Schrauben 18 miteinander verbunden sind, eine Folie 8 mit der Eigenschaft einer guten Wärmeableitung angeordnet. Diese Folie 8 reicht bis in die Befestigungen 4 und 7 der Halteplatte 5. Besonders geeignet ist hierzu eine Kupferfolie. Eine Teilkompensation durch diese Kupferfolie läßt sich schon bei einer Ausführung der Halteplatte 5 aus einfachem Stahl nachweisen. Um die Wärmeabgabe der Folie 8 zu steigern, ist sie mit mehreren Kühlrippen 12 und 13 versehen.

**Patentansprüche**

1. · Positionierungseinrichtung für den Magnetkopf (14) eines Laufwerkes für scheibenförmige Magnetspeicher (1) mit einem mittels einer Halteplatte (5) am Grundgestell (3) des Laufwerkes befestigten Schrittmotor (6), dessen Rotorwelle (17) eine Magnetkopfhalterung (2) radial zum Magnetspeicher verstellt, dadurch gekennzeichnet, daß die Halteplatte (5) aus einem Material mit geringer Wärmeausdehnung besteht und daß zwischen dem Schrittmotor (6) und der Halteplatte (5) eine Folie (8) mit guter Wärmeableitung angeordnet ist.

2. Positionierungseinrichtung nach Anspruch 1, dadurch gekennzeichnet, daß die Folie (8) mehrere Kühlrippen (12, 13) besitzt.

3. Positionierungseinrichtung nach Anspruch 1, dadurch gekennzeichnet, daß die Halteplatte (5) aus Nickelstahl besteht.

**Claims**

1. A positioning device for the magnetic head (14) of a drive mechanism for a magnetic disc store (1), which device comprises a stepping motor (6) which is secured to the chassis (3) of the drive mechanism by means of a mounting plate (5) and whose rotor shaft (17) moves a magnetic-head support (2) in a radial direction relative to the magnetic disc store, characterized in that the mounting plate (5) is made of a material with an low thermal expansion, and a foil (8) with satisfactory heat-sinking properties is arranged between the stepping motor (6) and the mounting plate (5).

2. A positioning device as claimed in Claim 1, characterized in that the foil (8) comprises a plurality of cooling fins (12, 13).

3. A positioning device as claimed in Claim 1, characterized in that the mounting plate (5) is made of nickel-steel.

**Revendications**

1. Dispositif de positionnement de la tête magnétique (14) d'un mécanisme d'entraînement d'une mémoire magnétique (1) en forme de disque, dispositif comportant un moteur pas à pas (6) qui est fixé par l'intermédiaire d'une platine (5) au châssis (3) du mécanisme d'entraînement et dont l'arbre de rotor (17) déplace un support de tête magnétique (2) dans le sens radial par rapport à la mémoire magnétique, caractérisé en ce que la platine (5) est constituée par un matériau à faible dilatation thermique et en ce qu'entre le moteur pas à pas (6) et la platine (5) est disposée une feuille (8) à bonne dissipation de chaleur.

2. Dispositif de positionnement selon la revendication 1, caractérisé en ce que la feuille (8) est munie de plusieurs ailettes de refroidissement (12, 13).

3. Dispositif de positionnement selon la revendication 1, caractérisé en ce que la platine (5) est en acier au nickel.